# EUROPEAN PATENT APPLICATION

(11) **EP 4 201 892 A1**
(43) Date of publication of application: **28.06.2023**
(21) Application number: 21886004.7
(22) Date of filing: 19.10.2021
(51) Int. Cl.: C02F 1/52, B01D 21/01, C02F 1/56, C02F 3/00

(54) **METHOD FOR TREATING WASTEWATER CONTAINING SOLUBLE FRACTION OF HIGHLY WATER ABSORBENT POLYMER**

(30) Priority: 29.10.2020 JP 2020181754
(71) Applicant: Unicharm Corporation, Shikokuchuo-shi, Ehime 799-0111 (JP); Sanyo Chemical Industries, Ltd., Kyoto-shi, Kyoto 605-0995 (JP)
(72) Inventor: KONISHI, Takayoshi, Kanonji-shi, Kagawa 769-1602 (JP); BANDOH, Takeshi, Kanonji-shi, Kagawa 769-1602 (JP); SUZUKI, Kazumitsu, Kyoto-shi, Kyoto 605-0995 (JP); MORITA, Eiji, Kyoto-shi, Kyoto 605-0995 (JP); HASEGAWA, Shimpei, Kyoto-shi, Kyoto 605-0995 (JP)
(74) Representative: Dolleymores
(86) International application number: PCT/JP2021/038662
(87) International publication number: WO 2022/091885

(57) **Abstract**

The purpose of the present disclosure is to provide a method for treating wastewater which contains a soluble fraction of a highly water absorbent polymer said method being capable of easily recovering the soluble fraction of the highly water absorbent polymer. The method of the present disclosure has the following configuration.A method for treating wastewater which contains the soluble fraction of a highly water absorbent polymer said method being characterized by involving: a wastewater preparation step for preparing wastewater containing the soluble fraction of the highly water absorbent polymer which is dissolved in the wastewater and obtained by oxidative decomposition of the highly water absorbent polymer and a dispersed fraction which is dispersed in said wastewater; an aggregate formation step for forming an aggregate which contains the soluble fraction and the dispersed fraction by adding a flocculant to the wastewater; and an aggregate recovery step for recovering said aggregate from the wastewater.

## Description

### FIELD

The present disclosure relates to a method of treating wastewater containing a soluble fraction of a super absorbent polymer.

### BACKGROUND

Examinations are underway to recycle absorbent articles used, for example, absorbent articles used. For example, Patent Literature 1 discloses a method for recovering pulp fibers from a used sanitary article containing pulp fibers and a polymer absorbent material, the method including a step of immersing the used sanitary article in ozone water to decompose the polymer absorbent material, a step of discharging the ozone water, in which the decomposed polymer absorbent material is dissolved, to obtain a residue of the sanitary article from which the polymer absorbent material is removed, and a step of washing the residue of the sanitary article and decomposing the residue of the sanitary article in a constituent element by stirring the residue of the sanitary article, from which the polymer absorbent material is removed, in an aqueous solution containing a disinfectant or in water.

### [CITATION LIST]

### [PATENT LITERATURE]

Patent Literature 1: Japanese Unexamined Patent Publication No. 2014-217835

### SUMMARY

### [TECHNICAL PROBLEM]

One characteristic of the method disclosed in Patent Literature 1 is that the polymer absorbent material is decomposed with ozone.

The inventors of the invention of the present application have found that, in order to treat wastewater containing a decomposed polymer absorbent material to comply with the effluent regulations by using, for example, microbes, the load of microbes is large, and, in conjunction therewith, it is required to increase a treatment time and increase the size of a microbe treatment tank.

Therefore, an aspect of the present disclosure is to provide a method of treating wastewater containing a soluble fraction of a super absorbent polymer and which makes it possible to easily recover the soluble fraction of the super absorbent polymer.

### [SOLUTION TO PROBLEM]

The inventors of the present disclosure have found a method of treating wastewater which contains a soluble fraction of a super absorbent polymer, the method comprising:
a wastewater preparation step of preparing the wastewater containing
   the soluble fraction of the super absorbent polymer, the soluble fraction being dissolved in the wastewater and obtained by oxidative decomposition of the super absorbent polymer, and
   a dispersed fraction dispersed in the wastewater;
an aggregate formation step of adding a flocculant to the wastewater to form an aggregate containing the soluble fraction and the dispersed fraction; and
an aggregate recovery step of recovering the aggregate from the wastewater.

### [ADVANTAGEOUS EFFECT OF THE INVENTION]

The method of treating wastewater which contains a soluble fraction of a super absorbent polymer of the present disclosure makes it possible to easily recover the soluble fraction of the super absorbent polymer.

### DESCRIPTION OF EMBODIMENTS

Specifically, the present disclosure relates to the following aspects.

### [Aspect 1]

A method of treating wastewater which contains a soluble fraction of a super absorbent polymer, the method comprising:
a wastewater preparation step of preparing the wastewater containing
   the soluble fraction of the super absorbent polymer, the soluble fraction being dissolved in the wastewater and obtained by oxidative decomposition of the super absorbent polymer, and
   a dispersed fraction dispersed in the wastewater;
an aggregate formation step of adding a flocculant to the wastewater to form an aggregate containing the soluble fraction and the dispersed fraction; and
an aggregate recovery step of recovering the aggregate from the wastewater.

The above-mentioned method of treating wastewater includes a predetermined wastewater preparation step, a predetermined aggregate formation step, and a predetermined aggregate recovery step.

In the above-mentioned wastewater preparation step, the wastewater contains the soluble fraction of the super absorbent polymer and also contains the dispersed fraction dispersed in the wastewater. This makes it possible to aggregate the soluble fraction of the above-mentioned super absorbent polymer with the above-mentioned dispersed fraction as a core in the aggregate formation step. As described above, the above-mentioned method of treating wastewater makes it possible to easily recover the soluble fraction of the super absorbent polymer.

### [Aspect 2]

The method according to the aspect 1, wherein
based on a total mass of the soluble fraction and the dispersed fraction, the wastewater contains the soluble fraction and the dispersed fraction in a ratio of 50 mass% or more and 99 mass% or less, and 1 mass% or more and 50 mass% or less.

In the above-mentioned method of treating wastewater, since the dispersed fraction is contained in a predetermined ratio, the soluble fraction of the above-mentioned super absorbent polymer can be aggregated with the above-mentioned dispersed fraction as a core. Accordingly, the above-mentioned method of treating wastewater makes it possible to easily recover the soluble fraction of the super absorbent polymer.

### [Aspect 3]

The method according to the aspect 1, wherein
based on a total mass of the soluble fraction and the dispersed fraction, the wastewater contains the soluble fraction and the dispersed fraction in a ratio of equal to or more than 5 mass% and less than 50 mass%, and more than 50 mass% and equal to or less than 95 mass%.

In the above-mentioned method of treating wastewater, since the amount of the dispersed fraction is larger than that of the soluble fraction, the soluble fraction of the above-mentioned super absorbent polymer is more easily aggregated with the above-mentioned dispersed fraction as a core. Accordingly, the above-mentioned method of treating wastewater makes it possible to easily recover the soluble fraction of the super absorbent polymer.

### [Aspect 4]

The method according to any one of the aspects 1 to 3, wherein
in the wastewater preparation step, the wastewater is formed by mixing two or more types of aqueous solutions having different ratios of the soluble fraction and the dispersed fraction.

In the above-mentioned method of treating wastewater, in the wastewater preparation step, the wastewater is formed by mixing two or more types of aqueous solutions having different ratios of the soluble fraction and the dispersed fraction. This makes it possible to more reliably form an aggregate having the above-mentioned dispersed fraction as a core in the aggregate formation step. Due to that, the above-mentioned method of treating wastewater makes it possible to easily recover the soluble fraction of the super absorbent polymer.

### [Aspect 5]

The method according to any one of the aspects 1 to 4, wherein
the flocculant includes an inorganic flocculant and a polymer flocculant, and
in the aggregate formation step, the inorganic flocculant is added to the wastewater, and subsequently the polymer flocculant is added to the wastewater.

In the above-mentioned method of treating wastewater, an inorganic flocculant and subsequently a polymer flocculant are added in the aggregate formation step. Accordingly, the above-mentioned method of treating wastewater makes it possible to easily recover the soluble fraction of the super absorbent polymer.

### [Aspect 6]

The method according to the aspect 5, wherein
a pH adjuster is added after adding the inorganic flocculant and before adding the polymer flocculant.

In the above-mentioned method of treating wastewater, the pH adjuster is added after adding the inorganic flocculant and before adding the polymer flocculant. Accordingly, the above-mentioned method of treating wastewater makes it possible to easily recover the soluble fraction of the super absorbent polymer.

### [Aspect 7]

The method according to the aspect 6, wherein
the pH adjuster is selected from the group consisting of calcium hydroxide, magnesium hydroxide, manganese hydroxide, iron(II) hydroxide, zinc hydroxide, copper hydroxide, aluminum hydroxide, and any combination thereof.

In the above-mentioned method of treating wastewater, the pH adjuster is selected from predetermined constituents. This not only makes it possible for the above-mentioned pH adjuster to adjust the pH as a neutralizing agent, but also makes it possible for a polyvalent metal ion (cation) to electrically neutralize the dispersed fraction, particularly, the negatively charged dispersed fraction, thereby promoting aggregation. Due to that, the above-mentioned method of treating wastewater makes it possible to easily recover the soluble fraction of the super absorbent polymer.

### [Aspect 8]

The method according to any one of the aspects 5 to 7, wherein
the polymer flocculant is an anionic polymer flocculant.

In the above-mentioned method of treating wastewater, the polymer flocculant is an anionic polymer flocculant. Accordingly, the above-mentioned method of treating wastewater makes it possible to easily recover the soluble fraction of the super absorbent polymer.

### [Aspect 9]

The method according to any one of the aspects 1 to 8, further comprising, before the wastewater preparation step, an oxidation treatment step of causing oxidative decomposition of the super absorbent polymer to form the soluble fraction of the super absorbent polymer.

The above-mentioned method of treating wastewater includes a predetermined oxidation treatment step before the wastewater preparation step.

The super absorbent polymer generally has a high level of hydrophilicity in terms of its function. When oxidative decomposition of such a super absorbent polymer having a high level of hydrophilicity is caused to form the soluble fraction of the super absorbent polymer, because the soluble fraction of the super absorbent polymer has a hydrophilic group such as a carboxyl group, a hydroxyl group, and an ether group, the level of hydrophilicity is more likely to become higher, and aggregation is less likely to occur.

The above-mentioned method of treating wastewater makes it possible to easily recover even such a soluble fraction of the super absorbent polymer which has a high level of hydrophilicity and is less likely to be aggregated.

### [Aspect 10]

The method according to any one of the aspects 1 to 9, wherein
the dispersed fraction is a member constituting a sanitary article used.

In the above-mentioned method of treating wastewater, the dispersed fraction is a member constituting a sanitary article used. This makes it possible to easily recover the soluble fraction of the super absorbent polymer by utilizing waste matter.

### [Aspect 11]

The method according to the aspect 10, wherein
the member constituting the sanitary article is selected from the group consisting of pulp fibers, nonwoven fabric, super absorbent polymers, films, excrement, and any combination thereof.

In the above-mentioned method of treating wastewater, the member constituting the sanitary article is selected from predetermined substances. This makes it possible to easily recover the soluble fraction of the super absorbent polymer by utilizing waste matter.

### [Aspect 12]

The method according to any one of the aspects 1 to 11, further comprising a microbial treatment step of treating the wastewater with a microbe after the aggregate formation step. Since the above-mentioned method further includes the predetermined microbial treatment step after the aggregate recovery step, the microbial treatment step can be efficiently performed.

Hereinafter, the method of treating wastewater containing a soluble fraction of a super absorbent polymer of the present disclosure (hereinafter, sometimes simply referred to as "method of treating wastewater") will be described in detail. The method of treating wastewater of the present disclosure includes the following steps.
. A wastewater preparation step of preparing the wastewater containing the soluble fraction of the super absorbent polymer, the soluble fraction being dissolved in the wastewater and obtained by oxidative decomposition of the super absorbent polymer, and containing a dispersed fraction dispersed in the wastewater (hereinafter, sometimes simply referred to as "wastewater preparation step").
. An aggregate formation step of adding a flocculant to the wastewater to form an aggregate containing the soluble fraction and the dispersed fraction (hereinafter, sometimes simply referred to as "aggregate formation step").
. An aggregate recovery step of recovering the aggregate from the wastewater (hereinafter, sometimes simply referred to as "aggregate recovery step").

The method of treating wastewater of the present disclosure includes the following steps as optional steps.
. An oxidation treatment step of causing oxidative decomposition of the super absorbent polymer to form the soluble fraction of the super absorbent polymer before the wastewater preparation step (hereinafter, sometimes simply referred to as "oxidation treatment step").
. A microbial treatment step of treating the wastewater with a microbe after the aggregate formation step (hereinafter, sometimes simply referred to as "microbial treatment step").

### <Wastewater preparation step>

In the wastewater preparation step, the wastewater is prepared, the wastewater containing the soluble fraction of the super absorbent polymer, the soluble fraction being dissolved in the wastewater and obtained by oxidative decomposition of the super absorbent polymer, and containing the dispersed fraction dispersed in the wastewater.

The above-mentioned wastewater contains the soluble fraction of the super absorbent polymer which is dissolved in the wastewater and contains the dispersed fraction dispersed in the wastewater.

The soluble fraction of the above-mentioned super absorbent polymer is obtained by oxidative decomposition.

The above-mentioned super absorbent polymer is not particularly limited, and examples thereof include a substance contained in sanitary articles. Examples of sanitary articles include a paper diaper, a urine absorbing pad, a sanitary napkin, a bed sheet, and a pet sheet.

The above-mentioned sanitary article has a liquid-permeable sheet, a liquid-impermeable sheet, and an absorbent body containing the above-mentioned super absorbent polymers and arranged between the liquid-permeable sheet and the liquid-impermeable sheet, for example. The above-mentioned absorbent body can contain pulp fibers in addition to the super absorbent polymers.

As the super absorbent polymer, those well-known in the technical field of the sanitary article can be exemplified, and examples thereof include starch-based, cellulose-based, synthetic polymer-based super absorbent polymers. Examples of the starch-based or cellulose-based super absorbent polymers include starch-acrylic acid (salt) graft copolymers, saponified substance of starchacrylonitrile copolymers, and crosslinked substance of sodium carboxymethyl cellulose. Examples of the synthetic polymer-based super absorbent polymer include polyacrylate-based, polysulfonate-based, maleate anhydride-based, polyacrylamide-based, polyvinyl alcohol-based, polyethylene oxide-based, polyaspartate-based, polyglutamate-based, polyalginate-based, starch-based, and cellulose-based super absorbent polymers (SAPs).

The soluble fraction of the super absorbent polymer contained in the above-mentioned wastewater can be obtained by immersing the super absorbent polymer in an aqueous solution containing an oxidizing agent, for example. This step will be described in the oxidation treatment step to be described later.

The soluble fraction of the super absorbent polymer obtained by oxidative decomposition of the super absorbent polymer has a molecular weight smaller than that of the original super absorbent polymer and also has a hydrophilic group, such as a carboxyl group, which has been contained in the original super absorbent polymer. Furthermore, since the soluble fraction of the super absorbent polymer has a hydrophilic group, such as a carboxyl group, a hydroxyl group, and an ether group, which is generated by oxidation, the level of hydrophilicity is more likely to become extremely high, and aggregation is less likely to occur.

The above-mentioned dispersed fraction is not particularly limited as long as it can serve as a core of aggregate of the aggregate formation step that is described later. When the above-mentioned super absorbent polymers are contained in a sanitary article, the super absorbent polymers can be a member constituting the sanitary article. This makes it possible to easily recover the soluble fraction of the super absorbent polymer by utilizing waste matter.

Examples of members constituting the sanitary article include members (such as fabric and film) that can constitute a liquid-permeable sheet, members (such as a film) that can constitute a liquid-impermeable sheet, members (such as fabric, super absorbent polymers, pulp fibers) that can constitute an absorbent body (such as an absorbent core and a core wrap), pressure sensitive adhesives for pressure sensitive adhesion to clothing, adhesives for joining the above-mentioned members, and excrement. This makes it possible to easily recover the soluble fraction of the super absorbent polymer by utilizing waste matter.

In the present specification, the soluble fraction and the dispersed fraction are divided as follows. In accordance with "14. Suspended matter and evaporation residue" of the "Testing Methods For Industrial Wastewater" in JIS K 0102: 2016, "a) suspended matter" corresponds to the above-mentioned dispersed fraction, and "c) soluble evaporation residue" corresponds to the above-mentioned soluble fraction.

In the above-mentioned test, an "organic filtration membrane" is selected as a filtration material.

The above-mentioned wastewater can be first wastewater (hereinafter, sometimes referred to as "soluble-fraction-rich") containing the above-mentioned soluble fraction in an amount equal to or more than the above-mentioned dispersed fraction. For example, the first wastewater can contain the above-mentioned soluble fraction and dispersed fraction in a ratio of preferably 50 mass% or more and 99 mass% or less, and 1 mass% or more and 50 mass% or less, more preferably 65 mass% or more and 95 mass% or less, and 5 mass% or more and 35 mass% or less, and further preferably 75 mass% or more and 95 mass% or less, and 5 mass% or more and 25 mass% or less based on the total mass thereof. This makes it possible to aggregate the soluble fraction of the above-mentioned super absorbent polymer with the above-mentioned dispersed fraction as a core.

The above-mentioned wastewater can be second wastewater (hereinafter, sometimes referred to as "dispersed-fraction-rich") containing the above-mentioned dispersed fraction in an amount more than the above-mentioned soluble fraction. For example, the second wastewater can contain the above-mentioned soluble fraction and dispersed fraction in a ratio of equal to or more than 5 mass% and less than 50 mass%, and more than 50 mass% and equal to or less than 95 mass%, preferably 5 mass% or more and 40 mass% or less, and 60 mass% or more and 95 mass% or less, and more preferably 5 mass% or more and 35 mass% or less, and 65 mass% or more and 95 mass% or less based on the total mass thereof. This increases the proportion of the dispersed fraction serving as a core of an aggregate, making it easier to form an aggregate in the subsequent aggregate formation step.

In the above-mentioned wastewater preparation step, two or more types of aqueous solutions (for example, wastewater) having different ratios of the above-mentioned soluble fraction and dispersed fraction are mixed, making it possible to form the wastewater having the above-mentioned ratio (first wastewater or second wastewater).

For example, by mixing a soluble-fraction-rich second aqueous solution (for example, a second aqueous solution having a ratio of the above-mentioned first wastewater) to a dispersed-fraction-rich first aqueous solution (for example, a first aqueous solution having a ratio of the above-mentioned second wastewater), wastewater having a new ratio (for example, new wastewater having a ratio of the above-mentioned first wastewater, or new wastewater having a ratio of the above-mentioned second wastewater) can be formed.

Furthermore, by mixing a dispersed-fraction-rich second aqueous solution (for example, a second aqueous solution having a ratio of the above-mentioned second wastewater) to a soluble-fraction-rich first aqueous solution (for example, a first aqueous solution having a ratio of the above-mentioned first wastewater), wastewater having a new ratio (for example, new wastewater having a ratio of the above-mentioned first wastewater, or new wastewater having a ratio of the above-mentioned second wastewater) can be formed.

### <Oxidation treatment step>

In the method of treating wastewater of the present disclosure, the oxidation treatment step is an optional step. In the above-mentioned oxidation treatment step, before the wastewater preparation step, oxidative decomposition of the super absorbent polymer is caused to form the soluble fraction of the super absorbent polymer.

In the above-mentioned oxidation treatment step, for example, the wastewater containing the soluble fraction of the super absorbent polymer can be formed by treating the super absorbent polymer with an oxidizing-agent-containing aqueous solution containing an oxidizing agent to cause oxidative decomposition of the super absorbent polymer, and dissolving the oxidativelydecomposed super absorbent polymer in the oxidizing-agent-containing aqueous solution.

Examples of the oxidizing agent include ozone (for example, an ozone-containing gas), hydrogen peroxide, chlorine dioxide, peracetic acid, sodium hypochlorite, and the like.

Examples of the above-mentioned oxidation treatment step include steps disclosed in Japanese Patent Application Publication No. 2014-217835, Japanese Patent Application Publication No. 2016-881, Japanese Patent Application Publication No. 2019-007119, Japanese Patent Application Publication No. 2019-085447, Japanese Patent Application Publication No. 2019-108639, and Japanese Patent Application Publication No. 2019-108640.

### <Aggregate formation step>

In the above-mentioned aggregate formation step, a flocculant is added to the above-mentioned wastewater to form an aggregate containing the above-mentioned soluble fraction and the above-mentioned dispersed fraction.

The above-mentioned flocculant is not particularly limited, and examples thereof include inorganic flocculants and polymer flocculants (nonionic polymer flocculants, anionic polymer flocculants, and cationic polymer flocculants).

Examples of the above-mentioned inorganic flocculant include polyaluminum chloride, aluminum sulfate, ferric chloride, ferrous sulfate, and polyferric sulfate.

The above-mentioned inorganic flocculant is added to the wastewater preferably at a concentration of 1,000 to 40,000 ppm, and more preferably at a concentration of 2,000 to 30,000 ppm, although the concentration varies depending on the type of the inorganic flocculant. This is from the viewpoint of an aggregation action. The concentration of the above-mentioned inorganic flocculant changes depending on the concentration (amount) of the soluble fraction, and the higher the concentration (the larger the amount) of the soluble fraction, the higher the concentration of the inorganic flocculant tends to be.

Examples of the above-mentioned nonionic polymer flocculant include polyacrylamide, polyethylene oxide, guar gum, starch, and water-soluble urea resin.

Examples of the above-mentioned anionic polymer flocculant include a partially hydrolyzed product of sodium polyacrylate and polyacrylamide, a carboxymethylcellulose-sodium salt, and sodium alginate.

Examples of the above-mentioned cationic polymer flocculant include cationic modified products of polyacrylamide (Mannich modified product, Hofmann modified product, and the like), chitosan, polyvinylimidacillin, polydiallylamine, polyethyleneimine, polyvinylpyridine, cationized starch, epichlorohydrin-amine condensate, a salt (co)polymer of octonary nitrogen-containing (meth)acrylate or (meth)acrylamide and acid, a quaternary nitrogen-containing (meth)acrylate or (meth)acrylamide (co)polymer, and mixtures thereof.

As the above-mentioned polymer flocculant, the above-mentioned anionic polymer flocculant is preferable. The anionic polymer flocculant is used in combination with an inorganic flocculant that is a cationic system, making it easier to easily recover the soluble fraction of the super absorbent polymer.

The above-mentioned polymer flocculant is added to the wastewater preferably at a concentration of 1 ppm or more, and more preferably at a concentration of 3 ppm or more, although the concentration varies depending on the type of the polymer flocculant. This is from the viewpoint of an aggregation action. The upper limit of the concentration of the above-mentioned polymer flocculant is not particularly limited, but examples thereof include 30,000 ppm in consideration of the viscosity and the like of the wastewater.

When the above-mentioned inorganic flocculant and polymer flocculant are used in combination as the above-mentioned flocculant, it is preferable to add the above-mentioned inorganic flocculant to the above-mentioned wastewater, and to subsequently add the above-mentioned polymer flocculant to the above-mentioned wastewater. This makes it possible to easily recover the soluble fraction of the super absorbent polymer.

In the above-mentioned aggregate formation step, a pH adjuster can be added to the wastewater to promote the formation of an aggregate.

Examples of the above-mentioned pH adjuster include acids and alkalis. Examples of the above-mentioned alkalis include hydroxides, salts, and the like of alkali metals, alkaline earth metals, and the like.

Examples of the above-mentioned alkalis include lithium hydroxide, sodium hydroxide, potassium hydroxide, rubidium hydroxide, cesium hydroxide, calcium hydroxide, magnesium hydroxide, manganese hydroxide, iron(II) hydroxide, zinc hydroxide, copper hydroxide, aluminum hydroxide, and salts thereof, for example, carbonates such as lithium carbonate, lithium hydrogen carbonate, sodium carbonate, sodium hydrogen carbonate, potassium carbonate, potassium hydrogen carbonate, rubidium carbonate, rubidium hydrogen carbonate, cesium carbonate, cesium hydrogen carbonate, calcium carbonate, calcium hydrogen carbonate, magnesium carbonate, magnesium hydrogen carbonate, manganese carbonate, manganese hydrogen carbonate, iron(II) carbonate, iron(II) hydrogen carbonate, zinc carbonate, zinc hydrogen carbonate, copper carbonate, copper hydrogen carbonate, aluminum carbonate, and aluminum hydrogen carbonate.

The above-mentioned pH adjuster can be added to the wastewater as necessary, but when using the above-mentioned inorganic flocculant and polymer flocculant in combination as the above-mentioned flocculant, it is preferable to add the pH adjuster after adding the above-mentioned inorganic flocculant and before adding the above-mentioned polymer flocculant. This makes it possible to adjust the pH of the wastewater to a pH at which the polymer flocculant becomes more likely to act.

The above-mentioned pH adjuster is added so that the pH of the wastewater is preferably 5.0 to 9.0, and more preferably 6.0 to 8.0, depending on the type of the polymer flocculant. This makes it possible to easily recover the soluble fraction of the super absorbent polymer.

### <Aggregate recovery step>

In the above-mentioned aggregate recovery step, the above-mentioned aggregate is recovered from the wastewater.

The above-mentioned aggregate can be recovered by using a method known in the technical field, for example, a belt press dehydrator, a screw press dehydrator, or the like.

### <Microbial treatment step>

In the method of treating wastewater of the present disclosure, the microbial treatment step is an optional step.

In the above-mentioned microbial treatment step, the above-mentioned wastewater is treated with a microbe after the above-mentioned aggregate formation step. Performing the treatment with microbes makes it easier for the wastewater to comply with effluent regulations.

The microbial treatment step can be performed according to methods known in the technical field, for example Japanese Patent Application Publication No. 2016-123973.

### Examples

Hereinafter, the present disclosure will be described with reference to examples, but the present disclosure is not limited to these examples.

### [Manufacturing Example 1]

A first aqueous solution was formed by mixing 1 part by mass of a sodium polyacrylate-based super absorbent polymer and 99 parts by mass of deionized water, and the first aqueous solution was ozone-treated under the following conditions to prepare simple wastewater A containing 1 mass% of a soluble fraction of the super absorbent polymer.
- Oxidizing agent: ozone-containing gas
- Ozone concentrations in ozone-containing gas: 200 g/m³
- Shape: Nanobubbles
- Treatment time: 30 minutes
- pH: 7.0

Because the simple wastewater A contained no dispersed fraction [a) suspended matter], the simple wastewater A contained the soluble fraction of the super absorbent polymer a concentration of 1.0 mass%.

### [Manufacturing example 2]

A second aqueous solution was formed by mixing 1 part by mass of pulp fibers (softwood pulp fibers) and 99 parts by mass of deionized water, and the second aqueous solution was ozone-treated under the following conditions.
- Oxidizing agent: ozone-containing gas
- Ozone concentrations in ozone-containing gas: 200 g/m³
- Shape: Nanobubbles
- Treatment time: 30 minutes
- pH: 7.0

The second aqueous solution after ozone treatment was filtered through a nylon 255 mesh, and the filtrate was used as simple wastewater B. The simple wastewater B contained pulp fibers at a concentration of 0.01 mass% as a dispersed fraction.

### Example 1

The simple wastewater A (soluble fraction) and the simple wastewater B (dispersed fraction) were mixed in a 300-mL beaker so that the mass ratio of the soluble fraction derived from the simple wastewater A and the dispersed fraction derived from the simple wastewater B was 99:1, thereby forming first wastewater. Polytetsu (manufactured by Nittetsu Mining Co., Ltd. and containing polyferric sulfate) was added as an inorganic flocculant to the first wastewater at a concentration of 11,000 ppm (with respect to the first wastewater), subsequently, calcium hydroxide as a pH adjuster was added to the first wastewater to adjust the pH to 7.0, and subsequently, SANFLOC AH-400P (manufactured by Sanyo Chemical Industries, Ltd., a polyacrylic acid-polyacrylamide copolymer) as an anionic polymer flocculant was added to the first wastewater at a concentration of 10 ppm (with respect to the first wastewater).

The first wastewater after adding the flocculant was evaluated according to the following criteria. The results are indicated in Table 1.

### [Filtration speed]

A: filtration was very fast.
B: filtration was fast.
C: filtration was slow or not possible.

### [Clarity of filtrate]

A: the filtrate was clear.
B: the filtrate was slightly turbid.
C: the filtrate was turbid.

### [Examples 2 to 4]

Examples 2 to 4 were performed in the same manner as in Example 1 except that the inorganic flocculant, the pH adjuster, and the polymer flocculant were changed as shown in Table 1. The results are indicated in Table 1.

AS-110P in Table 1 SANFLOC AS-110P (polyacrylic acid-polyacrylamide copolymer) which is an anionic polymer flocculant manufactured by Sanyo Chemical Industries, Ltd.

### Comparative Example 1

Comparative Example 1 was performed in the same manner as in Example 3 except that the wastewater No. 2 was used as the wastewater as shown in Table 1. The results are indicated in Table 1.

The wastewater No. 2 was examined also for an inorganic flocculant, a pH adjuster, and a polymer flocculant which were different from the inorganic flocculant, the pH adjuster, and the polymer flocculant shown in Table 1, but could not be aggregated.

### [Table 1]

**Table 1**

| Example No. | | Example 1 | Example 2 | Example 3 | Example 4 | Comparative Example 1 |
|---|---|---|---|---|---|---|
| Wastewater No. | | No. 1 | No. 1 | No. 1 | No. 1 | No. 2 |
| Soluble fraction derived from simple wastewater A | | 99 | 99 | 99 | 99 | 100 |
| Dispersed fraction derived from simple wastewater B | | 1 | 1 | 1 | 1 | 0 |
| Inorganic flocculant | Type | Polytetsu | Polytetsu | Polytetsu | Polytetsu | Polytetsu |
| | ppm | 11,000 | 11,000 | 11,000 | 11,000 | 11,000 |
| pH adjuster | Type | Ca(OH)₂ | Ca(OH)₂ | Ca(OH)₂ | Ca(OH)₂ | Ca(OH)₂ |
| | pH | 7.0 | 7.0 | 7.0 | 7.0 | 7.0 |
| Polymer flocculant | Type | AH-400P | AH-400P | AH-400P | AS-110P | AH-400P |
| | ppm | 10 | 13 | 17 | 13 | 17 |
| Filtration speed | | B | A | A | B | C |
| Clarity of filtrate | | A | A | A | B | C |

### [Examples 5 to 9]

Examples 5 to 9 were performed in the same manner as in Example 1 except that the wastewater, the inorganic flocculant, the pH adjuster, and the polymer flocculant were changed as shown in Table 2. The results are indicated in Table 2.

Furthermore, the diameter of the aggregate was visually evaluated. The results are indicated in Table 2.

### [Table 2]

**Table 2**

| Example No. | | Example 5 | Example 6 | Example 7 | Example 8 | Example 9 |
|---|---|---|---|---|---|---|
| Wastewater No. | | No. 3 | No. 3 | No. 3 | No. 3 | No. 3 |
| Soluble fraction derived from simple wastewater A | | 92 | 92 | 92 | 92 | 92 |
| Dispersed fraction derived from simple wastewater B | | 8 | 8 | 8 | 8 | 8 |
| Inorganic flocculant | Type | Polytetsu | Polytetsu | Polytetsu | Polytetsu | Polytetsu |
| | ppm | 3,800 | 3,800 | 3,800 | 3,800 | 3,800 |
| pH adjuster | Type | Ca(OH)₂ | Ca(OH)₂ | Ca(OH)₂ | Ca(OH)₂ | Ca(OH)₂ |
| | pH | 7.0 | 7.0 | 7.0 | 7.0 | 7.0 |
| Polymer flocculant | Type | AH-400P | AH-400P | AH-400P | AS-110P | AH-400P |
| | ppm | 3 | 10 | 13 | 15 | 17 |
| Filtration speed | | B | B | B | B | B |
| Clarity of filtrate | | B | B | A | A | A |
| Aggregate size/mm | | 3.0 to 4.5 mm | 4.5 to 5.0 mm | 4.5 to 5.0 mm | 4.5 to 5.0 mm | 4.5 to 5.0 mm |

## Claims

1. A method of treating wastewater which contains a soluble fraction of a super absorbent polymer, the method comprising:
a wastewater preparation step of preparing the wastewater containing
the soluble fraction of the super absorbent polymer, the soluble fraction being dissolved in the wastewater and obtained by oxidative decomposition of the super absorbent polymer, and
a dispersed fraction dispersed in the wastewater;
an aggregate formation step of adding a flocculant to the wastewater to form an aggregate containing the soluble fraction and the dispersed fraction; and
an aggregate recovery step of recovering the aggregate from the wastewater.

2. The method according to claim 1, wherein
based on a total mass of the soluble fraction and the dispersed fraction, the wastewater contains the soluble fraction and the dispersed fraction in a ratio of 50 mass% or more and 99 mass% or less, and 1 mass% or more and 50 mass% or less.

3. The method according to claim 1, wherein
based on a total mass of the soluble fraction and the dispersed fraction, the wastewater contains the soluble fraction and the dispersed fraction in a ratio of equal to or more than 5 mass% and less than 50 mass%, and more than 50 mass% and equal to or less than 95 mass%.

4. The method according to any one of claims 1 to 3, wherein
in the wastewater preparation step, the wastewater is formed by mixing two or more types of aqueous solutions having different ratios of the soluble fraction and the dispersed fraction.

5. The method according to any one of claims 1 to 4, wherein
the flocculant includes an inorganic flocculant and a polymer flocculant, and
in the aggregate formation step, the inorganic flocculant is added to the wastewater, and subsequently the polymer flocculant is added to the wastewater.

6. The method according to claim 5, wherein
a pH adjuster is added after adding the inorganic flocculant and before adding the polymer flocculant.

7. The method according to claim 6, wherein
the pH adjuster is selected from the group consisting of calcium hydroxide, magnesium hydroxide, manganese hydroxide, iron(II) hydroxide, zinc hydroxide, copper hydroxide, aluminum hydroxide, and any combination thereof.

8. The method according to any one of claims 5 to 7, wherein
the polymer flocculant is an anionic polymer flocculant.

9. The method according to any one of claims 1 to 8, further comprising, before the wastewater preparation step, an oxidation treatment step of causing oxidative decomposition of the super absorbent polymer to form the soluble fraction of the super absorbent polymer.

10. The method according to any one of claims 1 to 9, wherein
the dispersed fraction is a member constituting a sanitary article used.

11. The method according to claim 10, wherein
the member constituting the sanitary article is selected from the group consisting of pulp fibers, nonwoven fabric, super absorbent polymers, films, excrement, and any combination thereof.

12. The method according to any one of claims 1 to 11, further comprising a microbial treatment step of treating the wastewater with a microbe after the aggregate formation step.
